(19) Europäisches Patentamt
European Patent Office
Office européen des brevets

(11) EP 3 476 563 B1

(12) **EUROPEAN PATENT SPECIFICATION**

(45) Date of publication and mention of the grant of the patent:
**02.08.2023 Bulletin 2023/31**

(21) Application number: **17815053.8**

(22) Date of filing: **12.05.2017**

(51) International Patent Classification (IPC):
***B29C 45/14*** (2006.01) ***B29C 65/70*** (2006.01)
***B29C 37/00*** (2006.01) ***B29C 45/00*** (2006.01)
***C08L 23/08*** (2006.01) ***C08K 3/26*** (2006.01)
***C08L 23/16*** (2006.01) *B29K 21/00* (2006.01)
*B29K 105/16* (2006.01)

(52) Cooperative Patent Classification (CPC):
(C-Sets available)
**B29C 45/0013; B29C 45/14311; B29C 65/70; C08K 3/26; C08L 23/0815; C08L 23/16;**
B29K 2021/003; B29K 2105/16; C08K 2003/265; C08L 2203/10; C08L 2205/025 (Cont.)

(86) International application number:
**PCT/JP2017/018071**

(87) International publication number:
**WO 2017/221583 (28.12.2017 Gazette 2017/52)**

(54) **JOINED BODY AND METHOD FOR MANUFACTURING SAME**

VERBUNDENER KÖRPER UND VERFAHREN ZUR HERSTELLUNG DAVON

CORPS ASSEMBLÉ ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2016 JP 2016125497**

(43) Date of publication of application:
**01.05.2019 Bulletin 2019/18**

(73) Proprietor: **ENEOS Materials Corporation**
**Tokyo 105-0021 (JP)**

(72) Inventors:
- **KOBAYASHI, Masato**
  **Tokyo 105-8640 (JP)**
- **KANAE, Kentarou**
  **Tokyo 105-8640 (JP)**

(74) Representative: **TBK**
**Bavariaring 4-6**
**80336 München (DE)**

(56) References cited:
**EP-A1- 2 213 580**
**EP-A1- 2 910 371**
**WO-A1-2014/111978**
**WO-A1-2014/111978**
**WO-A1-2015/087720**
**JP-A- H07 266 373**
**JP-A- 2013 204 195**
**US-A1- 2009 252 969**

- **Jiri Drobny: "Appendix 4: Processing Data Sheets for Commercial Thermoplastic Elastomers and Compounds A4.1 Processing of Styrenic Block Copolymers" In: "Handbook of Thermoplastic Elastomers", 13 June 2014 (2014-06-13), Elsevier Science & Technology Books, XP055654199, pages 359-370, * the whole document ***
- **Helmut Potente: "Entwicklung von Verfahrensvarianten für das 2-Komponentenspritzgießen", Abschlussbericht zum AIF Projekt 14565, 5 December 2008 (2008-12-05), XP055749302, Retrieved from the Internet: URL:https://igf.aif.de/innovationsfoerderung/industrielle-gemeinschaftsforschung/igf-steckbrief.php?id=10730&suchtext=14565 [retrieved on 2020-11-11]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **Jis: "Geometrical Product Specifications (GPS)-Surface texture: Profile method-Terms, definitions and surface texture parameters" In: "Geometrical Product Specifications (GPS)-Surface texture: Profile method-Terms, definitions and surface texture parameters", 21 March 2013 (2013-03-21), Japanese Standards Association, XP055751475,**

(52) Cooperative Patent Classification (CPC): (Cont.)

C-Sets
**C08L 23/0815, C08L 23/0815;**
**C08L 23/16, C08L 57/02**

## Description

### Technical Field

The present invention relates to a joined body using a thermoplastic elastomer and a method of manufacturing the same.

### Background Art

A joined body of an olefin-based vulcanized rubber molded body and an olefin-based thermoplastic elastomer is used for weather strips for automobiles such as an exterior molding, a gasket for window sealing, a gasket for door sealing, and a gasket for trunk sealing. A general method of manufacturing the joined body involves injecting a thermoplastic elastomer into a remaining cavity under a state in which an olefin-based vulcanized rubber molded body produced in advance is placed in a split mold of an injection molding machine, to thereby fuse an injection-molded product of the thermoplastic elastomer to the vulcanized rubber molded body.

With a view to producing such joined body, for example, various thermoplastic elastomers as described in Patent Literatures 1 to 5 have been investigated.

### Citation List

### Patent Literature

[PTL 1] JP 2011-152743 A
[PTL 2] WO 2008/133083 A1
[PTL 3] US 3287440 A
[PTL 4] US 3709840 A
[PTL 5] JP 2007-211184 A

According to a further Patent Literature represented by document EP 2 213 580 A1, there is disclosed a method of manufacturing a composite container being formed as a joined body, said method comprising injecting a thermoplastic elastomer after melting of the thermoplastic elastomer, into a mold in which a first molded body made of thermoplastic elastomer and provided with a label on its outer wall is placed, to thereby integrate a second molded body derived from the thermoplastic elastomer and the first molded body with each other, while the label remains sandwiched between the fitting walls of both bodies. The resin of the first molded body may be optionally processed in different ways for increasing the crystallinity thereof, including an optional adding of filler, colorant and additive to the resin.

### Summary of Invention

### Technical Problem

However, the related-art joined body using a thermoplastic elastomer does not have a satisfactory appearance owing to, for example, a conspicuous seam at a joining portion, and also has an insufficient joining strength at the seam in some cases.

In view of the foregoing, according to several aspects of the present invention, for solving at least some of the above-mentioned problems, there is provided a method of manufacturing a joined body, which provides satisfactory molding processability and can achieve both a satisfactory appearance and joining strength at a joining portion.

### Solution to Problem

The present invention has been made to solve at least some of the above-mentioned problems, and is achieved by the method of claim 1. Preferable embodiments of the invention are set out in claims 2 to 7.

### Advantageous Effects of Invention

According to the method of manufacturing a joined body according to the present invention, the following effects are obtained as a result of the molded body (I) containing the filler having a predetermined arithmetic average particle

diameter: a satisfactory joining strength to the molded body (II) derived from the thermoplastic elastomer is obtained by virtue of an anchoring effect, and besides, the joining portion to the molded body (II) is free of occurrence of a silver streak, resulting in a satisfactory appearance.

Brief Description of Drawings

FIG. 1 is an explanatory view for schematically illustrating a method of manufacturing a joined body according to an embodiment of the present invention.
FIG. 2 is an explanatory view for schematically illustrating the method of manufacturing a joined body according to this embodiment.
FIG. 3 is an explanatory view for schematically illustrating the method of manufacturing a joined body according to this embodiment.
FIG. 4 is an explanatory view for schematically illustrating the method of manufacturing a joined body according to this embodiment.

Description of Embodiments

Preferred embodiments of the present invention are described in detail below. It should be understood that the present invention is not limited to the embodiments described below, and encompasses various modifications that are implemented without departing from the scope of the present invention. As used herein, "(meth)acrylic ···" is a concept comprehending both of "acrylic ···" and "methacrylic ···". In addition, "··· (meth)acrylate" is a concept comprehending both of "··· acrylate" and "··· methacrylate".

1. Method of manufacturing Joined Body

A method of manufacturing a joined body according to an embodiment of the present invention includes injecting a thermoplastic elastomer, after melting of the thermoplastic elastomer, into a mold in which a molded body (I) is placed, to thereby integrate a molded body (II) derived from the thermoplastic elastomer and the molded body (I) with each other, wherein the material for forming the molded body (I) is vulcanized rubber, and the molded body (I) contains a filler, the filler having an arithmetic average particle diameter of from 1 μm to 5 μm. The molded body (I) and the molded body (II) to be used in the method of manufacturing a joined body according to this embodiment, and then the method of manufacturing a joined body, and applications of the joined body are hereinafter described in detail in the stated order.

1.1. Molded Body (I)

A material for forming the molded body (I) may be appropriately selected among vulcanized rubbers (e.g., ethylene propylene rubber, natural rubber, butadiene rubber, styrene butadiene rubber, butyl rubber, chloroprene rubber, isoprene rubber, acrylonitrile butadiene rubber, silicone rubber, fluorine rubber, acrylic rubber, urethane rubber, and epichlorohydrin rubber) depending on applications and purposes of the joined body, and a joining property to the thermoplastic elastomer for forming the molded body (II). A case in which the material for forming the molded body (I) is formed of a material containing a component similar to that of the thermoplastic elastomer for forming the molded body (II) is preferred because the mechanical strength of a joining surface can be further improved.

In the method of manufacturing a joined body, the molded body (II) derived from the thermoplastic elastomer and the molded body (I) are integrated with each other, and at this time, the molded body (I) and the molded body (II) have a joining surface. In this connection, the molded body (I) preferably has, as the joining surface, a cross-section obtained by cutting an unprocessed molded body (I). In addition, when a cross-section obtained by cutting a molded body (I) that has not been exposed to the atmosphere serves as the joining surface, it is considered that a joining failure due to, for example, the adsorption of a contaminant, such as water, in the atmosphere can be suppressed.

The molded body (I) is produced using vulcanized rubber containing a filler in order to further improve the mechanical strength of the joined body, and to obtain a satisfactory appearance at a joining portion to the molded body (II). The arithmetic average particle diameter of the filler contained in the molded body (I) needs to be from 1 μm to 5 μm, and is preferably from 1.5 to 3 μm. When the arithmetic average particle diameter of the filler falls within the above-mentioned range, a joined body that can satisfy both the mechanical strength and the satisfactory appearance can be easily manufactured. The arithmetic average particle diameter is, for example, calculated from a particle diameter distribution measured by a laser scattering particle size distribution measurement method.

A material for the filler contained in the molded body (I) may be appropriately selected depending on an intended

use in which the joined body is required. Specific examples thereof include a carbon material and an inorganic material. Of those, glass beads, glass balloons, glass flakes, asbestos, mica, calcium carbonate, talc, wet silica, dry silica, alumina, alumina silica, calcium silicate, hydrotalcite, kaolin, diatomaceous earth, graphite, pumice stone, ebonite powder, cotton flocks, cork powder, barium sulfate, a fluorine resin, polymer beads, polyolefin wax, cellulose powder, rubber powder, wood powder, carbon black, and the like may be preferably used. Of those, calcium carbonate is particularly preferred because a joined body that can satisfy both the mechanical strength and the satisfactory appearance can be easily manufactured. The use of the carbon material or the inorganic material as the filler can not only further improve the mechanical strength of the joined body, but also impart flame retardancy to the joined body.

The molded body (I) may contain another filler as long as the molded body (I) contains the filler having an arithmetic average particle diameter of from 1 μm to 5 μm as a filler. Examples of the other filler include a carbon material and an inorganic material each having an arithmetic average particle diameter of less than 1 μm, preferably 0.02 μm or more and less than 1 μm. In order to improve the mechanical strength and impart flame retardancy to the joined body, carbon black is particularly preferred.

An arithmetic average roughness (Ra) on a preset joining surface (cross-section) of the molded body (I) is preferably from 0.1 μm to 5 μm, more preferably from 0.5 μm to 4 μm. Herein, the arithmetic average roughness (Ra) is one kind of indicator of surface roughness, and is determined by calculating an average of the absolute values of heights in a reference length. A case in which the arithmetic average roughness is small means that values for the heights of the uneven shape of a surface are small (undulation is small), and a case in which the arithmetic average roughness is large means that a difference between the heights of the uneven shape of the surface is large (undulation is large). When the arithmetic average roughness (Ra) on the preset joining surface (cross-section) of the molded body (I) falls within the above-mentioned range, the joining portion to the molded body (II) is free of occurrence of a silver streak, and hence a satisfactory appearance is easily obtained, and besides, a satisfactory joining strength at a seam can be obtained by virtue of an anchoring effect.

The kurtosis (Rku) of a roughness curve on the preset joining surface (cross-section) of the molded body (I) is preferably from 1 to 30, more preferably from 5 to 24. Herein, the kurtosis (Rku) is one kind of indicator of surface roughness, and refers to an indicator of the degree of sharpness of an uneven shape formed on a surface. Specifically, the kurtosis is determined by dividing the fourth power of a height in a reference length by the fourth power of a root mean square height meaning the standard deviation of surface roughness. A case in which the kurtosis is small means a state in which the uneven shape of the surface is gentle, and a case in which the kurtosis is large means a state in which the uneven shape of the surface is sharp with an acute angle. When the kurtosis (Rku) of the roughness curve on the preset joining surface (cross-section) of the molded body (I) falls within the above-mentioned range, the joining portion to the molded body (II) is free of occurrence of a silver streak, and hence a satisfactory appearance is easily obtained, and besides, a satisfactory joining strength at a seam can be obtained by virtue of an anchoring effect.

The arithmetic average roughness (Ra), and the kurtosis (Rku) of the roughness curve, on the preset joining surface (cross-section) of the molded body (I) may be controlled by adjusting the arithmetic average particle diameter and content of the filler contained in the molded body (I). In addition, the arithmetic average roughness (Ra) and the kurtosis (Rku) may also be controlled by polishing the preset joining surface (cross-section) of the molded body (I) to the molded body (II) through the use of a file or the like.

1.2. Molded Body (II)

The molded body (II) is produced by injection-molding a molten thermoplastic elastomer into a mold in which the molded body (I) is placed. Thus, the molded body (II) and the cross-section of the molded body (I) are joined to be integrated with each other.

The thermoplastic elastomer serving as a raw material for the molded body (II) contains preferably 100 ppm to 1,000 ppm, more preferably 100 ppm to 800 ppm, particularly preferably 100 ppm to 600 ppm of water. When the water content falls within the above-mentioned range, molding processability is excellent in the injection molding of the thermoplastic elastomer, and besides, a joined body having a joining portion excellent in both appearance and joining strength can be manufactured. When the water content is higher than the above-mentioned range, there is a risk in that the water is heated in a cylinder of an injection molding machine to form an air bubble in the thermoplastic elastomer, and the air bubble is broken at the surface of a molded article to cause an appearance failure (silver streak). In addition, during the production of the joined body, the air bubble may cause a joining failure to the other molded body at the joining portion, or the air bubble may remain at the joining portion to decrease the joining strength. In addition, there is a risk in that a variation in weighing time for each time of molding may be increased in the weighing process of the injection molding, and hence productivity may be decreased in the case of a long weighing time, or the plasticization of the thermoplastic elastomer may fail in the case of a short weighing time. Meanwhile, when the water content is lower than the above-mentioned range, drying is excessive, and hence excessive heat treatment (temperature×time) is needed, with the result that alteration of the material itself (e.g., degradation or bleeding-out) may occur to decrease the joining

strength.

In the invention of the present application, the "water content of the thermoplastic elastomer" has the same meaning as the water content of pellets of the thermoplastic elastomer.

The water content of the thermoplastic elastomer in the invention of the present application is a value measured in conformity with JIS K7251 "Plastics-Determination of water content".

The water content of the thermoplastic elastomer may be controlled by subjecting the thermoplastic elastomer to heat treatment using a pellet dryer, such as a dehumidifying dryer, a vacuum dryer, or a hot-air dryer, at a temperature appropriate for the thermoplastic elastomer to be used, for a period of time appropriate therefor. When the drying temperature is high and the drying time is long, the water amount can be significantly reduced, but there is a risk in that the pellets of the thermoplastic elastomer may undergo blocking, or alteration thereof, such as bleeding-out, may be caused. In addition, when the drying temperature is low and the drying time is short, the water content tends to increase. In any case, the water content may be controlled by controlling the drying temperature and the drying time as described above.

The thermoplastic elastomer serving as the raw material for the molded body (II) is not particularly limited, and examples thereof include: a styrene-based hydrogenated block copolymer described in JP 2005-272528 A or the like; an elastomer produced from a raw material composition containing (A) an ethylene/α-olefin/non-conjugated polyene copolymer, (B) an α-olefin-based thermoplastic resin, and (C) a cross-linking agent (this elastomer is hereinafter sometimes referred to as "specific elastomer"); a vinyl chloride-based thermoplastic elastomer; an ester-based thermoplastic elastomer; a urethane-based thermoplastic elastomer; and an amide-based thermoplastic elastomer. Of those, the specific elastomer is particularly suitable. The raw material composition to be used for the production of the specific elastomer is described below.

<(A) Ethylene/α-olefin/non-conjugated Polyene Copolymer>

(A) The ethylene/α-olefin/non-conjugated polyene copolymer (hereinafter sometimes referred to as "component (A)") is a component to be used mainly for the purpose of imparting flexibility to the thermoplastic elastomer, and is preferably a copolymer having repeating units derived from ethylene, an α-olefin, and a non-conjugated polyene, respectively.

The α-olefin is preferably an α-olefin having 3 to 10 carbon atoms. The α-olefin has more preferably 3 to 8 carbon atoms, still more preferably 3 to 6 carbon atoms, particularly preferably 3 or 4 carbon atoms. The use of the α-olefin having 3 to 10 carbon atoms provides satisfactory copolymerizability between the α-olefin and the other monomers, and hence is preferred. Examples of the α-olefin may include propylene, 1-butene, 1-pentene, 1-hexene, 3-methyl-1-pentene, 4-methyl-1-pentene, 1-octene, and 1-decene. Of those, propylene, 1-butene, 1-hexene, and 1-octene are preferred, and propylene and 1-butene are more preferred. Of those α-olefins, the component (A) may contain a repeating unit derived from only one kind of α-olefin, or may contain repeating units derived from two or more kinds of α-olefins.

Examples of the non-conjugated polyene may include a linear acyclic diene, a branched acyclic diene, and an alicyclic diene. Examples of the linear acyclic diene include 1,4-hexadiene, 1,5-hexadiene, and 1,6-hexadiene. Examples of the branched acyclic diene include 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, and dihydromyrcene. Examples of the alicyclic diene include tetrahydroindene, methyl tetrahydroindene, dicyclopentadiene, bicyclo[2.2. 1]-hepta-2,5-diene, 5-methylene-2-norbomene, 5-ethylidene-2-norbornene, 5-propenyl-2-norbornene, 5-isopropylidene-2-norbomene, 5-cyclohexylidene-2-norbornene, and 5-vinyl-2-norbornene. Of those, 1,4-hexadiene, dicyclopentadiene, and 5-ethylidene-2-norbomene are preferred. Of those non-conjugated polyenes, the component (A) may contain a repeating unit derived from only one kind of non-conjugated polyene, or may contain repeating units derived from two or more kinds of non-conjugated polyenes.

The content of the ethylene unit in the component (A) is preferably from 50 mol% to 90 mol% with respect to 100 mol% in total of the ethylene unit and the α-olefin unit that are contained in the component (A). The content of the α-olefin unit in the component (A) is preferably from 5 mol% to 50 mol% with respect to 100 mol% in total of the ethylene unit and the α-olefin unit that are contained in the component (A). The content of the non-conjugated polyene unit in the component (A) is preferably from 3 mol% to 10 mol% with respect to 100 mol% in total of all repeating units contained in the component (A).

The raw material composition for producing the specific elastomer preferably contains 10 mass% to 95 mass% of the component (A) with respect to 100 mass% in total of (A) the ethylene/α-olefin/non-conjugated polyene copolymer, (B) the α-olefin-based thermoplastic resin, and (C) the cross-linking agent.

The component (A) may be a substituted copolymer or graft copolymer containing an ethylene/α-olefin/non-conjugated polyene copolymer as a basic skeleton. An example of the substituted copolymer may be a halogenated copolymer obtained by substituting part of hydrogen atoms of the above-mentioned copolymer with a halogen atom, such as a chlorine atom or a bromine atom. An example of the graft copolymer may be a graft copolymer obtained by

graft-polymerizing an unsaturated monomer to the above-mentioned polymer or the like. As the unsaturated monomer, there may be used, for example, conventionally known unsaturated monomers, such as vinyl chloride, vinyl acetate, (meth)acrylic acid, maleic acid, methyl (meth)acrylate, glycidyl (meth)acrylate, (meth)acrylamide, maleic anhydride, maleimide, dimethyl maleate, butadiene, isoprene, and chloroprene.

The component (A) may be synthesized by a known method, and may be synthesized by a method described in, for example, JP 2014-193969 A.

<(B) α-Olefin-based Thermoplastic Resin>

(B) The α-olefin-based thermoplastic resin (hereinafter sometimes referred to as "component (B)") may be used mainly for the purpose of imparting mechanical strength and heat resistance to the thermoplastic elastomer. In such case, the component (B) is preferably a resin formed of a polymer containing an α-olefin unit as a main component. The component (B) is preferably, for example, a resin formed of a polymer containing 80 mol% or more of the α-olefin unit with respect to 100 mol% of the entirety of the polymer.

In addition, the component (B) may be used mainly for the purpose of lowering the melt viscosity of the thermoplastic elastomer to impart fluidity thereto, to thereby prevent its solidification during a flow process in the mold. In such case, the component (B) is preferably a homopolymer of an α-olefin or a copolymer of two or more kinds of α-olefins, or a copolymer of an α-olefin and an unsaturated monomer other than the α-olefin. Two or more kinds of those components (B) may be used as appropriate depending on purposes of the addition thereof.

Herein, the "α-olefin" is a concept also including ethylene. As the α-olefin from which the α-olefin unit in the component (B) is derived, ethylene and an α-olefin having 3 to 12 carbon atoms are preferred. Examples thereof may include ethylene, propylene, 1-butene, 1-pentene, 1-hexene, 3-methyl-1-pentene, 4-methyl-1-pentene, 3-ethyl-1-pentene, 1-octene, 1-decene, and 1-undecene. Of those, one or more kinds selected from the group consisting of organic peroxide-degradable propylene and 1-butene are preferably used as at least part of the α-olefin from the viewpoint of maintaining processability at the time of molding.

Examples of the component (B) may include a propylene homopolymer, a propylene-ethylene copolymer, a propylene-1-butene copolymer, a propylene-1-pentene copolymer, a propylene-3-methyl-1-butene copolymer, a propylene-1-hexene copolymer, a propylene-3-methyl-1-pentene copolymer, a propylene-4-methyl-1-pentene copolymer, a propylene-3-ethyl-1-pentene copolymer, a propylene-1-octene copolymer, a propylene-1-decene copolymer, and a propylene-1-undecene copolymer. Of those, a propylene homopolymer and a propylene-ethylene copolymer are preferred.

The raw material composition for producing the specific elastomer preferably contains 3 mass% to 65 mass% of the component (B) with respect to 100 mass% in total of the component (A) and the component (B).

In addition, the gel fraction of a rubber in the specific elastomer composition is preferably 95% or more, more preferably 96% or more. When the gel fraction falls within the above-mentioned range, a more satisfactory joining strength of the joined body is obtained. A method of measuring the gel fraction is as described below.

About 200 mg of the thermoplastic elastomer composition is weighed, and cut into small pieces. Then, the resultant small pieces are immersed in 100 ml of cyclohexane at 23°C for 48 hours in a sealed container. Next, the sample is taken out onto filter paper, and dried with a vacuum dryer at 105°C for 1 hour under reduced pressure. A value obtained by subtracting, from the mass of the dry residue, (1) the mass of cyclohexane-insoluble components other than the rubber and the thermoplastic resin, and (2) the mass of the thermoplastic resin in the sample before the immersion in cyclohexane is taken as a "corrected final mass (p)".

Meanwhile, a value obtained by subtracting, from the mass of the sample, (3) the mass of cyclohexane-soluble components other than the rubber and the thermoplastic resin, (1) the mass of cyclohexane-insoluble components other than the rubber and the thermoplastic resin, and (4) the mass of the thermoplastic resin is taken as a "corrected initial mass (q)". Herein, the gel fraction (cyclohexane-insoluble content) is determined by the following equation (1).

$$\text{Gel fraction [mass\%]} = [\{\text{corrected final mass (p)}\} \div \{\text{corrected initial mass (q)}\}] \times 100 \qquad (1)$$

As a method of increasing the gel fraction, there are given, for example, a method involving using a rubber having a high iodine value for a raw material in the thermoplastic elastomer composition, a method involving increasing the content of the ethylene unit or the non-conjugated diene unit in the case where the rubber is an ethylene/α-olefin-based rubber, and a method involving increasing the blending amount of the cross-linking agent/cross-linking aid.

The component (B) may be synthesized according to a known composition and manufacturing method, and may be synthesized according to a composition and manufacturing method described in, for example, JP 2014-193969 A.

<(C) Cross-linking Agent>

(C) The cross-linking agent (hereinafter sometimes referred to as "component (C)") has a function of cross-linking at least part of the component (A) and the component (B) between components of the same kind or components of different kinds through heat treatment.

Examples of such component (C) may include a phenol-based cross-linking agent, an organic peroxide, sulfur, a sulfur compound, p-quinone, a derivative of p-quinone dioxime, a bismaleimide compound, an epoxy compound, a silane compound, an amino resin, a polyol cross-linking agent, polyamine, a triazine compound, and metal soap. Of those, a phenol-based cross-linking agent or an organic peroxide is preferably used. When the phenol-based cross-linking agent is used as the component (C), a cross-linking accelerator is preferably used in combination therewith. When the organic peroxide is used as the component (C), a cross-linking aid is preferably used in combination therewith.

Examples of the phenol-based cross-linking agent may include an o-substituted phenol-aldehyde condensate, a m-substituted phenol-aldehyde condensate, a brominated alkylphenol-aldehyde condensate, and a compound represented by the following general formula (2). Of those, a compound represented by the following general formula (2) is preferred.

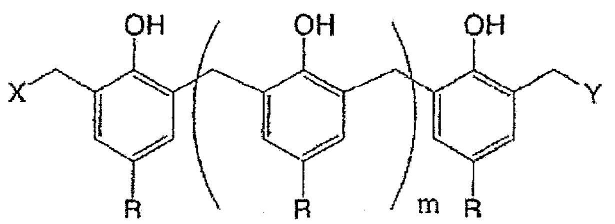

(2)

In the general formula (2), a plurality of Rs each independently represent a saturated hydrocarbon group having 1 to 15 carbon atoms, m represents an integer of from 0 to 10, and X and Y each independently represent a hydroxy group or a halogen atom.

The compound represented by the general formula (2) is a compound generally used as a cross-linking agent for a rubber as described in, for example, US 3287440 A or US 3709840 A. This compound may be produced by subjecting substituted phenol and an aldehyde to condensation polymerization in the presence of an alkaline catalyst.

When the phenol-based cross-linking agent is used as the component (C), the raw material composition preferably contains 0.2 part by mass to 10 parts by mass of the phenol-based cross-linking agent with respect to 100 parts by mass in total of the component (A) and the component (B).

The phenol-based cross-linking agent may be used alone, but is preferably used in combination with a cross-linking accelerator in order to adjust a cross-linking rate. As the cross-linking accelerator, for example, there may be used: a metal halide, such as stannous chloride or ferric chloride; or an organic halide, such as chlorinated polypropylene, a brominated butyl rubber, or a chloroprene rubber. In addition to the cross-linking accelerator, it is more preferred that a metal oxide, such as zinc oxide, or a dispersant, such as stearic acid, be further used in combination.

Examples of the organic peroxide may include 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy)perbenzoate, n-butyl-4,4-bis(t-butylperoxy)valerate, and t-butylperoxyisopropyl carbonate.

When the organic peroxide is used as the component (C), the raw material composition preferably contains 0.05 part by mass to 10 parts by mass of the organic peroxide with respect to 100 parts by mass in total of the component (A) and the component (B).

The organic peroxide may be used alone, but is preferably used in combination with a cross-linking aid in order to allow a cross-linking reaction to proceed gently to form uniform cross-linking. Examples of the cross-linking aid may include sulfur, a sulfur compound, an oxime compound, such as p-quinone oxime or p,p'-dibenzoylquinone oxime, and a polyfunctional monomer, such as ethylene glycol di(meth)acrylate, diethylene glycol di(meth)acrylate, triethylene glycol di(meth)acrylate, tetraethylene glycol di(meth)acrylate, polyethylene glycol di(meth)acrylate, trimethylolpropane tri(meth)acrylate, diallyl phthalate, tetraallyloxyethane, triallyl cyanurate, N,N'-m-phenylene bismaleimide, N,N'-tolylene bismaleimide, maleic anhydride, divinylbenzene, or zinc di(meth)acrylate.

<Other Components>

The raw material composition for producing the thermoplastic elastomer may further contain (D) an extender oil (hereinafter sometimes referred to as "component (D)"). The component (D) is used mainly for the purpose of imparting fluidity to the thermoplastic elastomer to be obtained. Examples of the component (D) include a mineral oil-based hydrocarbon and a low-molecular-weight hydrocarbon. Of those, a mineral oil-based hydrocarbon is preferred.

Examples of the mineral oil-based hydrocarbon may include Diana Process Oil PW90, PW100, and PW380, all of which are product names (all of which are manufactured by Idemitsu Kosan Co., Ltd.). Examples of the low-molecular-weight hydrocarbon may include low-molecular-weight polybutene and low-molecular-weight polybutadiene.

The content of the component (D) in the raw material composition for producing the thermoplastic elastomer is preferably set to 300 parts by mass or less with respect to 100 parts by mass of the component (A). The component (D) may be added into the raw material composition in the form of being contained in an oil-extended product, using at least one kind of the component (A) or the component (B) as the oil-extended product, may be added into the raw material composition in the form of being separated from the component (A) and the component (B), or may be added in both the forms.

The raw material composition for producing the thermoplastic elastomer may further contain a component other than the above-mentioned components. Examples of the other component may include a high-molecular-weight compound, an oligomer, a bactericide/fungicide, a plasticizer, a crystal nucleating agent, a flame retardant, a tackifier, a foaming aid (e.g., expandable microcapsules, such as Matsumoto Microsphere F and Matsumoto Microsphere FN series), an oxidation inhibitor, an antistatic agent, a blocking agent, a sealability improver, a lubricant, a stabilizer (e.g., an antioxidant, a heat stabilizer, a weathering agent, a metal deactivator, a UV absorber, a light stabilizer, or a copper inhibitor), a colorant/pigment (e.g., titanium oxide or carbon black), metal powder (e.g., ferrite), an inorganic fiber (e.g., a glass fiber or a metal fiber), an organic fiber (e.g., a carbon fiber or an aramid fiber), a composite fiber, an inorganic whisker (e.g., a potassium titanate whisker), a filler (e.g., glass beads, glass balloons, glass flakes, asbestos, mica, calcium carbonate, talc, wet silica, dry silica, alumina, alumina silica, calcium silicate, hydrotalcite, kaolin, diatomaceous earth, graphite, pumice stone, ebonite powder, cotton flocks, cork powder, barium sulfate, a fluorine resin, polymer beads, polyolefin wax, cellulose powder, rubber powder, wood powder, or carbon black) serving as a filling agent, and a carbon-based material (e.g., carbon black, for example, furnace black, such as Ketjen black, acetylene black, channel black, or gas black; a carbon fiber, such as a PAN-based carbon fiber, a pitch-based carbon fiber, or a rayon-based carbon fiber; graphite, such as spherical graphite, flake graphite, vein graphite, or amorphous graphite; and fullerene, a carbon microcoil, or a carbon nanotube), a metal-based material (e.g., metal powder, such as silver powder, gold powder, copper powder, iron powder, stainless-steel powder, nickel powder, aluminum powder, or platinum powder; metal oxide powder, such as zinc oxide, antimony oxide, or indium oxide; or a metal fiber, such as a copper fiber, a stainless-steel fiber, an aluminum fiber, or a nickel fiber), a ceramic-based material (e.g., a conductive ceramic, such as an alumina-titanium carbide-based ceramic, a zirconia-based ceramic, or a silicon carbide-based ceramic), or a composite material having a surface coated with a conductive material (e.g., glass, silica, or polymer particles coated with the carbon-based material, the metal-based material, or the ceramic-based material) serving as a conductive filler.

The raw material composition for producing the thermoplastic elastomer may further contain a high-molecular-weight compound or an oligomer to the extent that the effects of the present invention are not impaired. Examples thereof include a thermoplastic elastomer (e.g., an olefin-based, styrene-based, vinyl chloride-based, ester-based, urethane-based, or amide-based elastomer), a thermoplastic resin (e.g., polyvinyl chloride, polyethylene, polypropylene, polystyrene, acrylonitrile butadiene styrene, polyethylene terephthalate, nylon, polycarbonate, or polybutylene terephthalate), and a rubber (e.g., an ethylene propylene rubber, a natural rubber, a butadiene rubber, a styrene butadiene rubber, a butyl rubber, a chloroprene rubber, an isoprene rubber, an acrylonitrile butadiene rubber, a silicone rubber, a fluorine rubber, an acrylic rubber, a urethane rubber, or an epichlorohydrin rubber).

1.3. Method of Manufacturing Joined Body

A mode of the method of manufacturing a joined body according to this embodiment is described in detail below with reference to the drawings.

FIG. 1 to FIG. 4 are explanatory views for schematically illustrating one specific example of the method of manufacturing a joined body according to this embodiment. First, an injection mold 100 as illustrated in FIG. 1 is prepared. As illustrated in FIG. 1, the injection mold 100 includes a stationary die 10 and a movable die 12, which is relatively slidable in directions going away from and coming into contact with the stationary die 10. The stationary die 10 and the movable die 12 have such surfaces opposed to each other as to form a cavity having the shape of the joined body of interest under a state in which the injection mold 100 is completely clamped. In addition, a nozzle 14 for injecting a thermoplastic elastomer 20 is arranged in the movable die 12, and the nozzle 14 and the cavity communicate to each other.

In this embodiment, the stationary die 10 has an approximately concave shape, and the movable die 12 has

an approximately convex shape. Accordingly, when the injection mold 100 is clamped, die matching is performed so that the stationary die 10 covers the convex portion of the movable die 12.

Then, as illustrated in FIG. 2, a molded body 30 (molded body (I)) produced in advance is placed in the stationary die 10. After that, the movable die 12 is slid in the direction of the stationary die 10 to clamp the injection mold 100.

A material for the molded body 30 is not particularly limited. In addition, the molded body 30 may be foamed.

An example of the vulcanized rubber is a vulcanized rubber obtained from EPDM.

The molded body 30 may be produced by a known method, such as extrusion molding or injection molding.

Then, as illustrated in FIG. 3, after the injection mold 100 has been clamped, the thermoplastic elastomer 20 that has been melted is injected to integrate a molded body 32 (molded body (II)) and the molded body 30 (molded body (I)) with each other. At this time, when the molded body 30 (molded body (I)) contains a filler having an arithmetic average particle diameter of from 1 μm to 5 μm, there is obtained a joined body 40 free of occurrence of an appearance failure due to a silver streak at a joining surface 34 between the molded body 30 and the molded body 32, and excellent in joining strength. In addition, when the cross-section of the molded body 30 (molded body (I)) serving as the joining surface 34 has an arithmetic average roughness (Ra) of from 0.1 μm to 5 μm and a kurtosis (Rku) of a roughness curve of from 1 to 30, there is obtained the joined body 40 free of occurrence of an appearance failure due to a silver streak at the joining surface 34 between the molded body 30 and the molded body 32, and more excellent in joining strength. In addition, when the water content of the thermoplastic elastomer 20 to be injected is from 100 ppm to 1,000 ppm, a variation in weighing time for each time of molding is reduced in the weighing process of the injection molding, and hence satisfactory molding processability is obtained. The thermoplastic elastomer described in the "1.2. Molded Body (II)" section may be preferably used as the thermoplastic elastomer 20.

When supplied to the injection mold 100, the thermoplastic elastomer 20 is preferably supplied in the form of pellets, more preferably spherical pellets. When the spherical pellets are used, blocking due to adhesion of the pellets to each other at the supply port of the injection mold 100 and the like can be suppressed. In addition, the size of each of the pellets is preferably from 2 mm to 5 mm. When the size of the pellets is excessively large or excessively small, there is a risk in that their supply to the injection mold 100 may fail.

The conditions of the injection molding are as described below. A cylinder temperature is preferably from 200°C to 300°C, more preferably from 240°C to 260°C. The injection rate of the thermoplastic elastomer is preferably from 10 $cm^3$/sec to 150 $cm^3$/sec, more preferably from 20 $cm^3$/sec to 90 $cm^3$/sec. A mold temperature is preferably from 20°C to 100°C, more preferably from 45°C to 60°C. The injection molding is preferably performed under such conditions because the joining strength between the molded body 30 (molded body (I)) and the molded body 32 (molded body (II)) is further increased.

Finally, as illustrated in FIG. 4, the movable die 12 is slid in the direction going away from the stationary die 10. Thus, the joined body 40 is obtained.

An injection molding machine is not particularly limited, but examples thereof include a vertical clamping/vertical injection-type injection molding machine, a vertical clamping/horizontal injection-type injection molding machine, and a horizontal clamping/horizontal injection-type injection molding machine. Of those, a vertical clamping/vertical injection-type injection molding machine is particularly suitable.

### 1.4. Applications of Joined Body

The joined body obtained as described above can be widely applied to various applications, such as: an automobile bumper; an exterior molding; a gasket for window sealing; a gasket for door sealing; a gasket for trunk sealing; a roof side rail; an emblem; interior and exterior covering materials, such as an inner panel, a door trim, and a console box; a weather strip; a leather sheet required to have mar resistance; sealing materials and interior and exterior covering materials for aircraft/watercraft; sealing materials, interior and exterior covering materials, waterproof sheet materials, and the like for civil engineering/architecture; sealing materials and the like for general machinery/apparatus; packing for light electrical parts/water supply; sealing materials, covering materials, housings, and the like in fuel cell stacks; a track pad for a railroad; a roll for information equipment; a cleaning blade; a film for an electronic part; protective films in semiconductor and flat panel display (FPD) manufacturing processes; an image protective film for a photograph or the like; a medical equipment part; an electric wire; daily sundries; and ordinary processed products, such as sporting goods.

## 2. Examples

The present invention is specifically described below by way of Examples. However, the present invention is not limited to these Examples. In Examples and Comparative Examples, "part(s)" and "%" are by mass unless otherwise indicated.

2.1. Example 1

<Manufacture of Joined Body>

100 Parts by mass of an ethylene/propylene/5-ethylidene-2-norbomene terpolymer (product name: "EP 57C", manufactured by JSR Corporation), 120 parts by mass of carbon black (product name: "SEAST SO", manufactured by Tokai Carbon Co., Ltd.), 50 parts by mass of calcium carbonate (product name: "SUPER SSS", arithmetic average particle diameter: 1.8 μm, manufactured by Maruo Calcium Co., Ltd.), 70 parts by mass of a paraffin-based process oil (product name: "PW90", manufactured by Idemitsu Kosan Co., Ltd.), 5 parts by mass of active zinc oxide (manufactured by Sakai Chemical Industry Co., Ltd.), and 1 part by mass of stearic acid (manufactured by ADEKA Corporation) were mixed using a Banbury mixer under the conditions of 50°C, 70 rpm, and 2.5 minutes to provide a mixture.

To the whole amount (346 parts by mass) of the resultant mixture, 10 parts by mass of a dehydrating agent (product name: "VESTA-PP", manufactured by Inoue Calcium Corporation), 0.6 part by mass of a vulcanization accelerator available under the product name "NOCCELER M-P", 0.5 part by mass of a vulcanization accelerator available under the product name "NOCCELER CZ-G", 1.2 parts by mass of a vulcanization accelerator available under the product name "NOCCELER TT-P", and 2 parts by mass of a vulcanization accelerator available under the product name "NOCCELER BZ-P" (all of the vulcanization accelerators were manufactured by Ouchi Shinko Chemical Industrial Co., Ltd.), and 2 parts by mass of sulfur were added, and the resultant was kneaded at 50°C using an open roll, followed by vulcanization at 170°C for 10 minutes to provide a vulcanized rubber sheet measuring 120 mm× 120 mm×2 mm (length×width×thickness). The sheet was punched using a dumbbell cutter to a length of 60 mm and a width of 50 mm to provide a molded body (I).

The arithmetic average roughness Ra, and the kurtosis Rku of the roughness curve, of a cross-section of the resultant molded body (I) were measured using a laser microscope (manufactured by Olympus Corporation, LEXT OLS4000) at a magnification of 432×, and were found to be as follows: Ra=0.9 μm, Rku=16.2.

EXCELINK 1805B (manufactured by JSR Corporation, durometer hardness: A80, MFR: 20 g/10 min (230°C/2.16 kg), spherical pellets each having a size of 3 mm) was used as a thermoplastic elastomer. The water content of the EXCELINK 1805B was measured in conformity with JIS K7251 (Method B), and found to be 4,080 ppm.

In order to reduce the water content of the pellets of the EXCELINK 1805B, drying was performed by using a dryer (product name: "parallel-flow batch dryer", manufactured by Satake Chemical Equipment Mfg., Ltd.), setting a drying temperature to 80°C, and changing a drying time as appropriate. As a result, it was found that the water content of the pellets of the EXCELINK 1805B was able to be controlled on the basis of the drying time. In view of this, with the use of the dryer, the drying temperature was set to 80°C and the drying time was set to 420 minutes, and as a result, the water content of the pellets of the EXCELINK 1805B became 180 ppm.

Next, the olefin-based vulcanized rubber adherend obtained above was attached in advance into a split mold of an injection molding machine having a clamping force of 110 tons (product name: "J-110AD", manufactured by The Japan Steel Works, Ltd.).

Next, the EXCELINK 1805B having its water content controlled to 180 ppm by drying as described above was injection-molded into the split mold under the conditions of a cylinder temperature of 250°C, a mold temperature of 50°C, and an injection rate of 50 $cm^3$/sec so as to fit into a vacant portion (in the split mold having attached thereto the molded body (I)), to thereby provide a joined body (120 mm×120 mm×2 mm (length×width×thickness)) in which a molded body (II) derived from the thermoplastic elastomer and the molded body (I) were joined to each other.

<Appearance Evaluation>

The obtained joined body was visually observed to investigate the presence or absence of a silver streak (shining stripe pattern on a joined body surface) on the molded body (II). A case in which the silver streak does not occur is ideal and may be judged satisfactory. However, evaluation was performed as follows from a practical point of view: a case in which the silver streak was not visually recognizable was judged to have a satisfactory injection molding appearance and shown as "A" in Table 1; and a case in which the silver streak was severe and practical use was impossible was judged to have a poor injection molding appearance and shown as "B" in Table 1.

<Evaluation of Joining Strength>

The obtained joined body was punched with a JIS-No. 3 dumbbell cutter to produce a test piece (dumbbell-shaped test piece) for vulcanized rubber adhesive property evaluation. In this case, the above-mentioned flat plate was punched so that an injection-fused surface (surface in which the thermoplastic elastomer and the olefin-based vulcanized rubber adherend were fused by injection) was located between gauge marks and was perpendicular to a pulling direction, to thereby produce a sample piece for joining strength evaluation.

The sample piece for joining strength evaluation was pulled at a loading rate of 200 mm/min using a tensile tester (model name: "AG-2000", manufactured by Shimadzu Corporation), and a value for its breaking strength (unit: MPa) was taken as an indicator of a vulcanized rubber adhesive property. As a value for joining strength increases, it may be judged that a joining property is more excellent. A larger value for the breaking strength may be said to be more satisfactory, but practically, in the case of 3 MPa or more, the joining strength may be judged satisfactory. In the case of less than 3 MPa, the joining strength is poor.

<Evaluation of Molding Processability>

Injection molding was repeated 50 times by the same method as that in the <Manufacture of Joined Body> section, and weighing times each required for the injection molding machine to weigh a certain amount of pellets required for injection molding of the same molded body were tabulated. A difference between the longest time and the shortest time of the tabulated weighing times was adopted as an indicator of molding processability. A smaller variation in weighing time is more preferred because more stable mass production can be performed. In the case where the difference between the longest time and the shortest time is 2 seconds or less, stable mass production can be performed in a practical manner. In this case, therefore, the molding processability was judged satisfactory and shown as "A" in Table 1. In the case where the difference is more than 2 seconds, the extent of variation in weighing time is large and stable mass production is difficult. In this case, therefore, the molding processability was judged poor and shown as "B" in Table 1.

2.2. Examples 2 to 7, and Comparative Examples 1 to 4 and 9

Joined bodies were produced and evaluated in the same manner as in Example 1 described above except that: the water content of the pellets of the EXCELINK 1805B was set as shown in Tables 1 and 2 below; and the injection molding conditions were set as shown in Tables 1 and 2 below. The water content of the pellets of the EXCELINK 1805B was adjusted by, as described above, using the dryer (product name: "parallel-flow batch dryer", manufactured by Satake Chemical Equipment Mfg., Ltd.), setting the drying temperature to 80°C, and changing the drying time as appropriate.

2.3. Comparative Example 5

A molded body (I) was produced in the same manner as in Example 1 described above except that the composition was changed as shown in Table 2 below. The cross-section of the produced molded body (I) serving as the joining surface to the molded body (II) was polished with sheet paper having a grain size of 180 (product name: "GBS-180", manufactured by Trusco Nakayama Corporation) to produce a molded body (I) having a cross-section (preset joining surface) having an arithmetic average roughness (Ra) of 5.9 μm and a kurtosis (Rku) of 3.7.

Then, a joined body was produced and evaluated in the same manner as in Example 1 described above except that: the water content of the pellets was set to 170 ppm by using the dryer (product name: "parallel-flow batch dryer", manufactured by Satake Chemical Equipment Mfg., Ltd.), setting the drying temperature to 80°C, and changing the drying time as appropriate; and the injection molding conditions were set as shown in Table 2 below.

2.4. Comparative Examples 6 to 8

Molded bodies (I) were produced in the same manner as in Comparative Example 5 described above except that sheet paper having a grain size shown below was used to adjust the cross-section of the molded body (I) serving as the joining surface to the molded body (II) to achieve an arithmetic average roughness (Ra) and kurtosis (Rku) shown in Table 2 below. Then, joined bodies were produced and evaluated in the same manner as in Example 1 described above except that: the water content of the pellets was set as shown in Table 2 below by using the dryer (product name: "parallel-flow batch dryer", manufactured by Satake Chemical Equipment Mfg., Ltd.), setting the drying temperature to 80°C, and changing the drying time as appropriate; and the injection molding conditions were set as shown in Table 2 below.

<Sheet Paper Used>

- ·Comparative Example 6: sheet paper having a grain size of 220 (product name: "GBS-220", manufactured by Trusco Nakayama Corporation)
- ·Comparative Example 7: sheet paper having a grain size of 320 (product name: "GBS-320", manufactured by Trusco Nakayama Corporation)

·Comparative Example 8: sheet paper having a grain size of 1,200 (product name: "GBS-1200", manufactured by Trusco Nakayama Corporation)

Table 1

| | | | Example | | | | | | |
|---|---|---|---|---|---|---|---|---|---|
| | | | 1 | 2 | 3 | 4 | 5 | 6 | 7 |
| Composition of molded body (I) | EDPM | EP57C | 100 | 100 | 100 | 100 | 0 | 0 | 0 |
| | Natural rubber | RSS3 | 0 | 0 | 0 | 0 | 100 | 0 | 0 |
| | BR | BR01 | 0 | 0 | 0 | 0 | 0 | 100 | 0 |
| | SBR | SL552 | 0 | 0 | 0 | 0 | 0 | 0 | 100 |
| | Olefin resin | VESTOPLAST 508 | 0 | 0 | 0 | 0 | 10 | 10 | 10 |
| | Paraffin-based process oil | PW90 | 70 | 79 | 87 | 79 | 0 | 0 | 0 |
| | Naphthene-based process oil | NM280 | 0 | 0 | 0 | 0 | 10 | 0 | 0 |
| | Aromatic process oil | Aromax 3 | 0 | 0 | 0 | 0 | 0 | 15 | 0 |
| | Zinc oxide | | 5 | 5 | 5 | 5 | 5 | 3 | 3 |
| | Stearic acid | | 1 | 1 | 1 | 1 | 2 | 2 | 2 |
| | Antioxidant | NOCRAC 6C | 0 | 0 | 0 | 0 | 1 | 0 | 0 |
| | | NOCRAC 810-NA | 0 | 0 | 0 | 0 | 0 | 1 | 0 |
| | Dehydrating agent | VESTA-PP | 10 | 10 | 10 | 10 | 0 | 0 | 0 |
| | Vulcanization accelerator | NOCCELER M-P | 0.6 | 0.6 | 0.6 | 0.6 | 0 | 0 | 0 |
| | | NOCCELER TT-P | 1.2 | 1.2 | 1.2 | 1.2 | 0 | 0 | 0 |
| | | NOCCELER D | 0 | 0 | 0 | 0 | 0 | 0 | 0.6 |
| | | NOCCELER CZ-G | 0.5 | 0.5 | 0.5 | 0.5 | 1 | 0 | 0 |
| | | NOCCELER NS-P | 0 | 0 | 0 | 0 | 0 | 0.9 | 0 |
| | | NOCCELER BZ-P | 2 | 2 | 2 | 2 | 0 | 0 | 0 |
| | | NOCCELER DM-P | 0 | 0 | 0 | 0 | 0 | 0 | 1.2 |
| | Sulfur | Sulfur | 2 | 2 | 2 | 2 | 2 | 1.5 | 1.5 |
| | Carbon black | SEAST SO | 120 | 120 | 120 | 120 | 0 | 0 | 0 |
| | | SEAST 3 | 0 | 0 | 0 | 0 | 50 | 60 | 50 |
| | | Particle diameter (μm) | 0.043 | 0.043 | 0.043 | 0.043 | 0.028 | 0.028 | 0.028 |
| | Calcium carbonate | SUPER SSS | 50 | 100 | 150 | 0 | 60 | 60 | 60 |
| | | SUPER S | 0 | 0 | 0 | 100 | 0 | 0 | 0 |
| | | Particle diameter (μm) | 1.8 | 1.8 | 1.8 | 2.7 | 1.8 | 1.8 | 1.8 |
| Arithmetic average roughness (Ra) (μm) | | | 0.9 | 1.0 | 1.1 | 1.3 | 0.5 | 0.5 | 0.5 |
| Kurtosis (Rku) | | | 16.2 | 12.7 | 7.0 | 15.5 | 12.6 | 12.1 | 14.7 |
| Water content of thermoplastic elastomer (ppm) | | | 180 | 210 | 180 | 130 | 300 | 330 | 190 |
| Injection molding conditions | Cylinder temperature (°C) | | 250 | 250 | 250 | 250 | 250 | 250 | 250 |
| | Mold temperature (°C) | | 50 | 50 | 50 | 50 | 50 | 50 | 50 |
| | Injection rate ($cm^3$/sec) | | 50 | 50 | 50 | 50 | 50 | 50 | 50 |
| Evaluation results | Molding appearance | | A | A | A | A | A | A | A |
| | Joining strength (MPa) | | 3.5 | 3.6 | 3.5 | 3.6 | 3.1 | 3.2 | 3.1 |
| | Molding processability | | A | A | A | A | A | A | A |

Table 2

| | | | Comparative Example | | | | | | | | |
|---|---|---|---|---|---|---|---|---|---|---|---|
| | | | 1 | 2 | 3 | 4 | 5 | 6 | 7 | 8 | 9 |
| Composition of molded body (I) | EDPM | EP103AF | 100 | 100 | 100 | 100 | 100 | 100 | 100 | 100 | 0 |
| | | EP57C | 0 | 0 | 0 | 0 | 0 | 0 | 0 | 0 | 100 |
| | Paraffin-based process oil | PW380 | 85 | 85 | 85 | 85 | 85 | 85 | 85 | 85 | 0 |
| | | PW90 | 0 | 0 | 0 | 0 | 0 | 0 | 0 | 0 | 79 |
| | Zinc oxide | | 5 | 5 | 5 | 5 | 5 | 5 | 5 | 5 | 5 |
| | Stearic acid | | 1 | 1 | 1 | 1 | 1 | 1 | 1 | 1 | 1 |
| | Processing aid | HITANOL 1501 | 1 | 1 | 1 | 1 | 1 | 1 | 1 | 1 | 0 |
| | Mold release agent | Struktol WB212 | 2 | 2 | 2 | 2 | 2 | 2 | 2 | 2 | 0 |
| | Plasticizer | Polyethylene glycol | 1 | 1 | 1 | 1 | 1 | 1 | 1 | 1 | 0 |
| | Dehydrating agent | VESTA-PP | 10 | 10 | 10 | 10 | 10 | 10 | 10 | 10 | 0 |
| | Vulcanization accelerator | NOCCELER M-P | 1 | 1 | 1 | 1 | 1 | 1 | 1 | 1 | 0.6 |
| | | NOCCELER PX | 1 | 1 | 1 | 1 | 1 | 1 | 1 | 1 | 0 |
| | | NOCCELER TT-P | 0.5 | 0.5 | 0.5 | 0.5 | 0.5 | 0.5 | 0.5 | 0.5 | 1.2 |
| | | NOCCELER D | 1 | 1 | 1 | 1 | 1 | 1 | 1 | 1 | 0 |
| | | NOCCELER CZ-G | 0 | 0 | 0 | 0 | 0 | 0 | 0 | 0 | 0.5 |
| | | NOCCELER BZ-P | 0 | 0 | 0 | 0 | 0 | 0 | 0 | 0 | 2 |
| | Sulfur | Sulfur | 2.2 | 2.2 | 2.2 | 2.2 | 2.2 | 2.2 | 2.2 | 2.2 | 2 |
| | Carbon black | SEAST 116 | 145 | 145 | 145 | 145 | 145 | 145 | 145 | 145 | 0 |
| | | SEAST SO | 0 | 0 | 0 | 0 | 0 | 0 | 0 | 0 | 120 |
| | | SEAST 3 | 0 | 0 | 0 | 0 | 0 | 0 | 0 | 0 | 0 |
| | | Particle diameter (μm) | 0.038 | 0.038 | 0.038 | 0.038 | 0.038 | 0.038 | 0.038 | 0.038 | 0.043 |
| | Calcium carbonate | NS#2300 | 0 | 0 | 0 | 0 | 0 | 0 | 0 | 0 | 0 |
| | | Ground Calcium Carbonate N-35 | 0 | 0 | 0 | 0 | 0 | 0 | 0 | 0 | 100 |
| | | Particle diameter (μm) | 0 | 0 | 0 | 0 | 0 | 0 | 0 | 0 | 6.3 |
| Arithmetic average roughness (Ra) (μm) | | | 0.9 | 0.9 | 0.9 | 0.9 | 5.9 | 8.4 | 4.1 | 1.0 | 2.5 |
| Kurtosis (Rku) | | | 21.5 | 21.5 | 21.5 | 21.5 | 3.7 | 5.4 | 6.0 | 25.0 | 25.0 |
| Water content of thermoplastic elastomer (ppm) | | | 50 | 1,100 | 1,930 | 4,080 | 170 | 190 | 200 | 1,300 | 1,270 |
| Injection molding conditions | Cylinder temperature (°C) | | 250 | 250 | 250 | 250 | 250 | 250 | 250 | 250 | 250 |
| | Mold temperature (°C) | | 50 | 50 | 50 | 50 | 50 | 50 | 50 | 50 | 50 |
| | Injection rate ($cm^3$/sec) | | 50 | 50 | 50 | 50 | 50 | 50 | 50 | 50 | 50 |
| Evaluation results | Molding appearance | | A | B | B | B | B | B | B | B | B |
| | Joining strength (MPa) | | 2.9 | 3.2 | 3.2 | 3.2 | 3.3 | 3.4 | 3.4 | 3.3 | 3.4 |
| | Molding processability | | A | B | B | B | A | A | A | A | A |

Abbreviations or product names of components in Tables 1 and 2 above mean the following components. In addition, numerical values for components in the composition of the molded body (I) in Tables 1 and 2 above each represent part(s) by mass.

<EPDM>

- ·EP103AF: ethylene/propylene/5-ethylidene-2-norbomene terpolymer (product name: "EP 103AF", manufactured by JSR Corporation, ethylene unit content: 59 mass%, propylene unit content: 36.5 mass%, Mooney viscosity: 91)
- ·EP57C: ethylene/propylene/5-ethylidene-2-norbomene terpolymer (product name: "EP 57C", manufactured by JSR Corporation)

<Natural Rubber>

·RSS3: RSS3 grade

<BR>

·BR01: polybutadiene rubber (product name: "JSR BR01", manufactured by JSR Corporation, cis-1,4 bond content: 95 mass%, Mooney viscosity: 45)

<SBR>

·SL552: solution-polymerized styrene butadiene rubber (product name: "JSR SL552", manufactured by JSR Corporation, bound styrene content: 23.5 mass%, vinyl bond content: 33.5 mass%, Mooney viscosity: 55)

<Olefin Resin>

·VESTOPLAST 508: ethylene/propylene/1-butene copolymer (product name: "VESTOPLAST 508", manufactured by Evonik Degussa Corporation, ethylene unit content: 16 mol%, propylene unit content: 24 mol%, melt viscosity (190°C, ASTM-D3236): 8,000 MPa s, density: 0.87 g/cm$^3$)

<Paraffin-based Process Oil>

·PW380: product name: "Diana Process Oil PW380", manufactured by Idemitsu Kosan Co., Ltd.
·PW90: product name: "Diana Process Oil PW90", manufactured by Idemitsu Kosan Co., Ltd.

<Naphthene-based Process Oil>

·NM280: product name: "Diana Process Oil NM280", manufactured by Idemitsu Kosan Co., Ltd.

<Aromatic Process Oil>

·Aromax 3: product name: "Aromax 3", manufactured by Fuji Kosan Company, Ltd.

<Processing Aid>

·HITANOL 1501: product name: "HITANOL 1501", manufactured by Hitachi Kasei Kogyo K.K.

<Releasing Agent>

·Struktol WB212: product name: "Struktol WB212", manufactured by Schill+Seilacher GmbH

<Antioxidant>

- NOCRAC 6C: product name: "NOCRAC 6C", manufactured by Ouchi Shinko Chemical Industrial Co., Ltd.
- NOCRAC 810NA: product name: "NOCRAC 810-NA", manufactured by Ouchi Shinko Chemical Industrial Co., Ltd.

<Dehydrating Agent>

·VESTA-PP: product name: "VESTA-PP", manufactured by Inoue Calcium Corporation, calcium oxide

<Vulcanization Accelerator>

·NOCCELER M-P: product name: "NOCCELER M-P", manufactured by Ouchi Shinko Chemical Industrial Co., Ltd.
·NOCCELER PX: product name: "NOCCELER PX", manufactured by Ouchi Shinko Chemical Industrial Co., Ltd.
·NOCCELER TT-P: product name: "NOCCELER TT-P", manufactured by Ouchi Shinko Chemical Industrial Co., Ltd.
·NOCCELER D: product name: "NOCCELER D", manufactured by Ouchi Shinko Chemical Industrial Co., Ltd.
·NOCCELER CZ-G: product name: "NOCCELER CZ-G", manufactured by Ouchi Shinko Chemical Industrial Co., Ltd.
·NOCCELER BZ-P: product name: "NOCCELER BZ-P", manufactured by Ouchi Shinko Chemical Industrial Co., Ltd.
·NOCCELER NS-P: product name: "NOCCELER NS-P", manufactured by Ouchi Shinko Chemical Industrial Co., Ltd.
·NOCCELER DM-P: product name: "NOCCELER DM-P", manufactured by Ouchi Shinko Chemical Industrial Co., Ltd.

<Carbon Black>

·SEAST 116: product name: "SEAST 116", manufactured by Tokai Carbon Co., Ltd., arithmetic average particle diameter: 0.038 μm
·SEAST SO: product name: "SEAST SO", manufactured by Tokai Carbon Co., Ltd., arithmetic average particle diameter: 0.043 μm
·SEAST 3: product name: "SEAST 3", manufactured by Tokai Carbon Co., Ltd., arithmetic average particle diameter: 0.028 μm

<Calcium Carbonate>

·SUPER SSS: product name: "SUPER SSS", arithmetic average particle diameter: 1.8 μm, manufactured by Maruo Calcium Co., Ltd.
·SUPER S: product name: "SUPER S", arithmetic average particle diameter: 2.7 μm, manufactured by Maruo Calcium Co., Ltd.
·NS#2300: product name: "NS#2300", arithmetic average particle diameter: 1 μm, manufactured by Nitto Funka Kogyo K.K.
·Ground Calcium Carbonate N-35: product name: "Ground Calcium Carbonate N-35", arithmetic average particle diameter: 6.3 μm, manufactured by Maruo Calcium Co., Ltd.

2.5. Evaluation Results

According to Examples 1 to 7 shown in Table 1 above, it was found that, according to the method of manufacturing a joined body according to the invention of the present application, satisfactory molding processability was obtained, and the obtained joined body showed satisfactory characteristics in terms of molding appearance and joining strength. On the other hand, it was found that, according to the method falling outside the scope of the invention of the present application, that is, when the molded body (I) did not contain the filler having an arithmetic average particle diameter of from 1 μm to 5 μm, a poor result was obtained in terms of molding processability, molding appearance, or joining strength.
The present invention is not limited to the embodiments described above, and various modifications may be made thereto. The present invention encompasses configurations substantially the same as the configurations described above in connection with the embodiments (e.g., a configuration having the same function, method, and results, or a configuration having the same object and effects). The present invention also encompasses a configuration in which an unsubstantial part of the configurations described above in connection with the embodiments is replaced by another configuration. The present invention also encompasses a configuration having the same actions and effects as those

of the configurations described above in connection with the embodiments, or a configuration capable of achieving the same object as that of the configurations described above in connection with the embodiments. The present invention also encompasses a configuration in which a known technology is added to the configurations described above in connection with the embodiments.

Reference Signs List

10 ... stationary die, 12 ··· movable die, 14 ... nozzle, 20 ... thermoplastic elastomer, 30 ··· molded body (molded body (I)), 32 ··· molded body (molded body (II)), 34 ··· joining surface, 40 ··· joined body, 100 ··· injection mold

## Claims

1. A method of manufacturing a joined body (40), comprising injecting a thermoplastic elastomer (20) after melting of the thermoplastic elastomer, into a mold (100) in which a molded body (I) is placed, to thereby integrate a molded body (II) derived from the thermoplastic elastomer (20) and the molded body (I) with each other, a material for forming the molded body (I) being a vulcanized rubber, and
   the molded body (I) containing a filler having an arithmetic average particle diameter of from 1 μm to 5 μm.

2. The method of manufacturing a joined body according to claim 1, wherein the filler comprises calcium carbonate.

3. The method of manufacturing a joined body according to claim 1 or 2,

   wherein the molded body (I) has a cross-section,
   wherein the cross-section has an arithmetic average roughness (Ra) of from 0.1 μm to 5 μm,
   wherein a roughness curve of the cross-section has a kurtosis (Rku) of from 1 to 30,
   wherein both the arithmetic average roughness (Ra) and the kurtosis (Rku) are measured by using a laser microscope, and
   wherein the cross-section of the molded body (I) and the molded body (II) are joined to each other.

4. The method of manufacturing a joined body according to any one of claims 1 to 3, wherein the thermoplastic elastomer contains 100 ppm to 1,000 ppm of water.

5. The method of manufacturing a joined body according to any one of claims 1 to 4, wherein injection molding is performed at a cylinder temperature of from 200°C to 300°C.

6. The method of manufacturing a joined body according to any one of claims 1 to 5, wherein injection molding is performed at a mold temperature of from 20°C to 100°C.

7. The method of manufacturing a joined body according to any one of claims 1 to 6, wherein injection molding is performed at an injection rate of the thermoplastic elastomer of from 10 $cm^3$/sec to 150 $cm^3$/sec.

8. A joined body, which is obtainable by the method of any one of claims 1 to 7.

## Patentansprüche

1. Verfahren zur Herstellung eines verbundenen Körpers (40), das ein Einspritzen eines thermoplastischen Elastomers (20) nach einem Schmelzen des thermoplastischen Elastomers in eine Form (100), in der ein Formkörper (I) platziert ist, umfasst, um dadurch einen aus dem thermoplastischen Elastomer (20) und dem Formkörper (I) herrührenden Formkörper (II) miteinander zu verbinden,

   wobei ein Material zum Ausbilden des Formkörpers (I) ein vulkanisierter Kautschuk ist und
   wobei der Formkörper (I) einen Füllstoff enthält, der einen arithmetischen mittleren Teilchendurchmesser von 1 μm bis 5 μm hat.

2. Verfahren zur Herstellung eines verbundenen Körpers nach Anspruch 1, wobei der Füllstoff Calciumcarbonat umfasst.

3. Verfahren zur Herstellung eines verbundenen Körpers nach Anspruch 1 oder 2,

wobei der Formkörper (I) einen Querschnitt hat,
wobei der Querschnitt einen arithmetischen Mittenrauwert (Ra) von 0,1 µm bis 5 µm hat,
wobei eine Rauheitskurve des Querschnitts eine Kurtosis (Rku) von 1 bis 30 hat,
wobei sowohl der arithmetische Mittenrauwert (Ra) als auch die Kurtosis (Rku) unter Verwendung eines Lasermikroskops gemessen werden und
wobei der Querschnitt des Formkörpers (I) und des Formkörpers (II) miteinander verbunden sind.

4. Verfahren zur Herstellung eines verbundenen Körpers nach einem der Ansprüche 1 bis 3, wobei das thermoplastische Elastomer 100 ppm bis 1.000 ppm Wasser enthält.

5. Verfahren zur Herstellung eines verbundenen Körpers nach einem der Ansprüche 1 bis 4, wobei ein Spritzgießen bei einer Zylindertemperatur von 200°C bis 300°C erfolgt.

6. Verfahren zur Herstellung eines verbundenen Körpers nach einem der Ansprüche 1 bis 5, wobei ein Spritzgießen bei einer Formtemperatur von 20°C bis 100°C erfolgt.

7. Verfahren zur Herstellung eines verbundenen Körpers nach einem der Ansprüche 1 bis 6, wobei ein Spritzgießen mit einer Einspritzgeschwindigkeit des thermoplastischen Elastomers von 10 $cm^3$/s bis 150 $cm^3$/s erfolgt.

8. Verbundener Körper, der durch das Verfahren von einem der Ansprüche 1 bis 7 erhältlich ist.

## Revendications

1. Procédé de fabrication d'un corps assemblé (40), comprenant l'injection d'un élastomère thermoplastique (20), après fusion de l'élastomère thermoplastique, à l'intérieur d'un moule (100) dans lequel est placé un corps moulé (I), pour intégrer ainsi un corps moulé (II) dérivé de l'élastomère thermoplastique (20) et le corps moulé (I) l'un avec l'autre, un matériau destiné à former le corps moulé (I) étant un caoutchouc vulcanisé, et
le corps moulé (I) contenant une charge ayant un diamètre de particules moyen arithmétique allant de 1 µm à 5 µm.

2. Procédé de fabrication d'un corps assemblé selon la revendication 1, dans lequel la charge comprend du carbonate de calcium.

3. Procédé de fabrication d'un corps assemblé selon la revendication 1 ou 2,

dans lequel le corps moulé (I) a une section transversale,
dans lequel la section transversale a une rugosité moyenne arithmétique (Ra) allant de 0,1 µm à 5 µm,
dans lequel une courbe de rugosité de la section transversale a un aplatissement (Rku) de 1 à 30,
dans lequel la rugosité moyenne arithmétique (Ra) et l'aplatissement (Rku) sont tous deux mesurés au moyen d'un microscope laser, et
dans lequel la section transversale du corps moulé (I) et le corps moulé (II) sont assemblés l'un à l'autre.

4. Procédé de fabrication d'un corps assemblé selon l'une quelconque des revendications 1 à 3, dans lequel l'élastomère thermoplastique contient 100 ppm à 1000 ppm d'eau.

5. Procédé de fabrication d'un corps assemblé selon l'une quelconque des revendications 1 à 4, dans lequel le moulage par injection est effectué à une température de cylindre allant de 200 °C à 300 °C.

6. Procédé de fabrication d'un corps assemblé selon l'une quelconque des revendications 1 à 5, dans lequel le moulage par injection est effectué à une température de moule allant de 20 °C à 100 °C.

7. Procédé de fabrication d'un corps assemblé selon l'une quelconque des revendications 1 à 6, dans lequel le moulage par injection est effectué à un débit d'injection de l'élastomère thermoplastique allant de 10 $cm^3$/s à 150 $cm^3$/s.

8. Corps assemblé, qui peut être obtenu par le procédé de l'une quelconque des revendications 1 à 7.

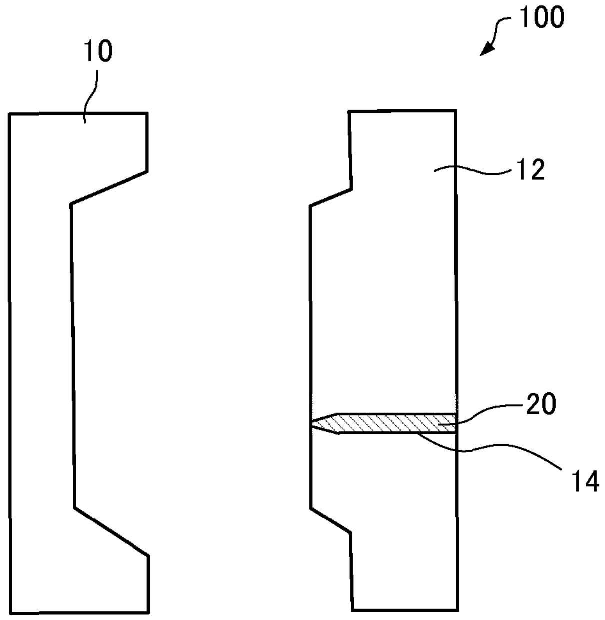


FIG. 1

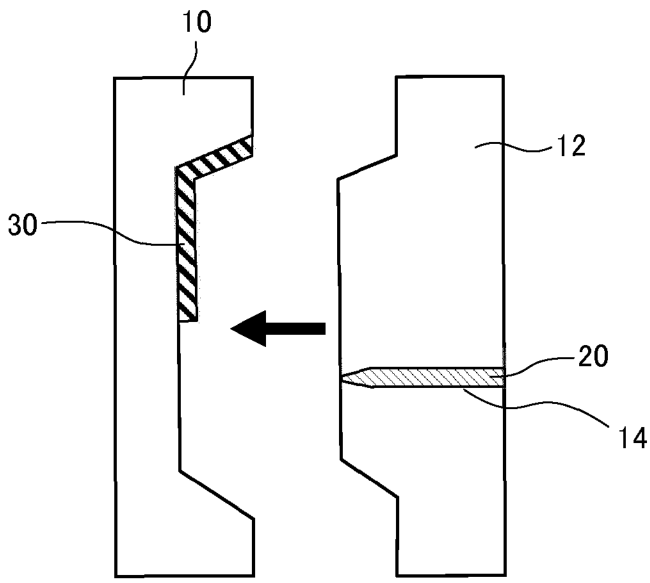


FIG. 2

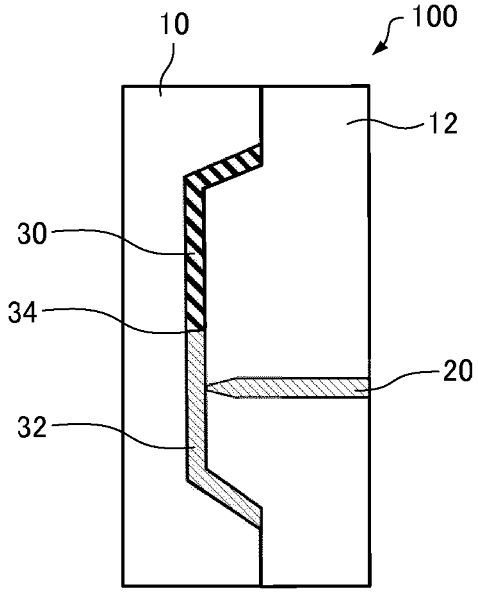


FIG. 3

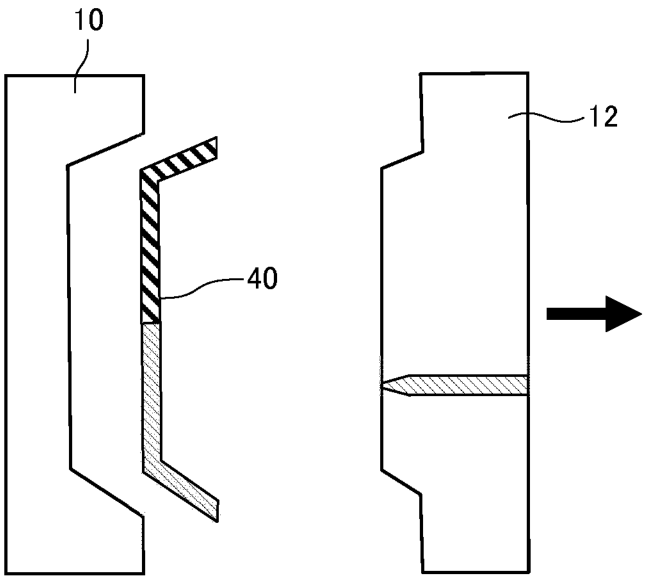


FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011152743 A
- WO 2008133083 A1
- US 3287440 A
- US 3709840 A
- JP 2007211184 A
- EP 2213580 A1
- JP 2005272528 A
- JP 2014193969 A